# EUROPEAN PATENT APPLICATION

(11) **EP 4 654 373 A1**
(43) Date of publication of application: **26.11.2025**
(21) Application number: 24823511.1
(22) Date of filing: 13.02.2024
(51) Int. Cl.: H01M 50/574, H01M 50/244, E05B 3/00, H01H 71/12, H01M 50/578, H01M 10/44, H01M 50/256, H02J 7/00

(54) **BATTERY STORAGE SYSTEM AND BATTERY PROTECTION UNIT**

(30) Priority: 14.06.2023 KR 20230076429; 12.01.2024 KR 20240005248
(71) Applicant: LG Energy Solution, Ltd., Seoul 07335 (KR)
(72) Inventor: JEONG, Su Yeup, Daejeon 34122 (KR)
(74) Representative: Plasseraud IP
(86) International application number: PCT/KR2024/002040
(87) International publication number: WO 2024/257989

(57) **Abstract**

The present disclosure relates to a battery storage system and a battery protection unit. More precisely, the present disclosure relates to a battery storage system including a rack door of a battery loading unit and a unit door of a battery protection unit, and a battery protection unit controlling a locking state of the unit door and an operation of a circuit breaker.

The battery storage system according to the present disclosure includes the unit door of the breaker accommodation portion in addition to the rack door of the battery loading unit where a battery is loaded, which allows the breaker to be operated without opening the battery loading unit. Thus, for example, it is possible to protect a user from static electricity flowing in the battery. The battery protection unit according to the present disclosure includes the handle assembly that is capable of simultaneously controlling the operation of the circuit breaker and the locking state of the unit door depending on the rotation thereof, which allows the unit door to be unlocked only when the circuit breaker operates. Thus, for example, it is possible to protect a user from electric shock.

## Description

### TECHNICAL FIELD

### CROSS-REFERENCE TO RELATED APPLICATIONS

This application is based on and claims priority from Korean Patent Application No. 10-2023-0076429, filed on June 14, 2023 and Korean Patent Application No. 10-2024-0005248, filed on January 12, 2024, with the Korean Intellectual Property Office, the disclosure of which is incorporated herein in its entirety by reference.

### TECHNICAL FIELD

The present disclosure relates to a battery storage system and a battery protection unit. More precisely, the present disclosure relates to a battery storage system including a rack door of a battery loading unit and a unit door of a battery protection unit, and a battery protection unit controlling a locking state of the unit door and an operation of a circuit breaker.

### BACKGROUND ART

A secondary battery ("rechargeable battery"), unlike a primary battery that cannot be recharged, is a battery that can be charged and discharged. Low-capacity secondary batteries are used in small-sized, portable electronic devices such as mobile phones, laptop computers, and camcorders, while high-capacity secondary batteries are widely used as power sources for driving the motors in, for example, hybrid vehicles.

A secondary battery may be used in the form of a battery cell, in which a positive electrode, a separator, and a negative electrode are sequentially stacked within an exterior material, and the space inside the exterior material is filled with an electrolyte. Meanwhile, a battery module or battery pack may be formed by gathering a plurality of battery cells and electrically connecting the battery cells, and a plurality of battery modules/packs may be loaded into a battery rack and are managed all at once.

The battery rack may be installed with a rack door installed to protect, for example, the batteries loaded therein.

### DISCLOSURE OF THE INVENTION

### TECHNICAL PROBLEM

The present disclosure provides a battery storage system and a battery protection unit in which an opening/closing door is installed in a circuit breaker accommodation portion separately from a rack door. The battery storage system and battery protection unit are capable of simultaneously controlling the locking state of the opening/closing door and the operation of the circuit breaker.

### TECHNICAL SOLUTION

A battery storage system according to the present disclosure may include: a battery loading unit where a battery is loaded; a rack door coupled to the battery loading unit; and a battery protection unit installed on one side of the battery loading unit and configured to control charging and discharging of the battery. The battery protection unit may include: a circuit breaker configured to interrupt power supplied to the battery; a main body portion configured to accommodate the circuit breaker; and a unit door coupled to the main body of the circuit breaker.

The battery protection unit may be configured to control operation of the circuit breaker depending on whether the unit door is locked to the main body.

The battery protection unit may be configured to stop the operation of the circuit breaker when the unit door is in a locked state, and to operate the circuit breaker when the unit door is in an unlocked state.

The opening/closing of the unit door may be controlled separately (or independently) from the rack door.

Meanwhile, the battery protection unit according to the present disclosure may include: a circuit breaker that interrupts current supplied to a battery; a main body that accommodates the circuit breaker; a unit door coupled to the main body; a handle assembly that opens/closes the unit door according to a rotational operation; and a shaft assembly protruding from the main body and fastened to the handle assembly to rotate together with the handle assembly when the handle assembly rotates. The circuit breaker may be connected to the shaft assembly to interrupt the current supplied to the battery or release the interruption of the current depending on the rotating direction of the shaft assembly.

The handle assembly may include: a door handle provided to be rotationally operated; a rotation body coupled to the door handle to rotate together with the door handle depending on the rotation of the door handle and including an opening into which the shaft assembly is fitted to rotate the shaft assembly; a locking member fixedly coupled to the unit door and configured to lock or unlock the unit door depending on the rotating direction of the shaft assembly. The rotation body may be rotatably fastened to the locking member.

The locking member may include: a first member provided outside the rotation and fixedly coupled to the unit door; a second member provided inside the rotation body and that locks or unlocks the unit door depending on the rotating direction of the shaft assembly; and a connecting member connecting the first member and the second member.

The rotation body may include: a first body to which the door handle is coupled; and a second body coupled to the first body with the locking member interposed therebetween, and a connecting member insertion hole into which the connecting member is inserted may be formed between the first body and the second body.

The connecting member insertion hole may extend to one side by the amount of radius of rotation of the rotation body.

The shaft assembly may include: a first shaft protruding from the main body; a second shaft extending from the first shaft toward the unit door; and a protrusion formed on the second shaft in a direction different from the direction in which the second shaft extends.

The first shaft may have a prismatic shape, and the opening may have a shape corresponding to the prismatic shape of the first shaft so that the first shaft is fitted into the opening.

The protrusion may protrude in a direction perpendicular to the direction in which the second shaft extends.

The second member may be provided with a shaft insertion groove into which the shaft assembly is inserted and a protrusion coupling groove provided inside the shaft insertion groove and configured such that the protrusion is fitted to or separated from the protrusion coupling groove depending on the rotating direction of the shaft assembly, and the unit door may be locked as the protrusion is fitted into the protrusion coupling groove and may be unlocked as the protrusion is separated from the protrusion coupling groove.

The circuit breaker may include: a switch connected to a power supply circuit that supplies power to the battery and configured to turn on/off the power supply circuit; and a switch lever coupled to the shaft assembly to extend in a direction different from a direction of a rotation axis of the shaft assembly and configured to rotate together with the shaft assembly to move to a switch-on location or a switch-off location to perform an on/off operation of the switch depending on the rotation of the shaft assembly.

The switch may include: a fixed contact installed at a fixed location; and a movable contact including one end fixed to the power supply circuit, and the other end coupled to the switch lever and moves together with the switch lever when the switch lever rotates. The other end may be brought into contact with the fixed contact when the switch lever moves to the switch-on location, and may be separated from the fixed contact when the switch lever moves to the switch-off location.

The shaft assembly may be configured to rotate in a direction to lock the unit door to move the switch lever to the switch-on location and to rotate in a direction to unlock the unit door to move the switch lever to the switch-off location.

The main body may be provided with one or more handle.

### ADVANTAGEOUS EFFECTS

The battery storage system according to the present disclosure includes the unit door of the breaker accommodation portion in addition to the rack door of the battery loading unit where a battery is loaded, which allows the breaker to be operated without opening the battery loading unit. Thus, for example, it is possible to protect a user from static electricity flowing in the battery.

The battery protection unit according to the present disclosure includes the handle assembly that is capable of simultaneously controlling the operation of the circuit breaker and the locking state of the unit door depending on the rotation thereof, which allows the unit door to be unlocked only when the circuit breaker operates. Thus, for example, it is possible to protect a user from electric shock.

### BRIEF DESCRIPTION OF THE INVENTION

FIG. 1 is a perspective view illustrating a conventional battery storage system.
FIG. 2 is a perspective view illustrating a battery storage system, according to the present disclosure.
FIG. 3 is a perspective view illustrating a state in which a unit door is closed in a battery protection unit, according to the present disclosure.
FIG. 4 is a perspective view illustrating a state in which the locked state of the unit door is being released in the battery protection unit, according to the present disclosure.
FIG. 5 is a perspective view illustrating a state in which the locked state of the unit door is set in the battery protection unit, according to the present disclosure.
FIG. 6A is a vertical cross-sectional view illustrating a coupling structure of a locking member in the battery protection unit, according to the present disclosure.
FIG. 6B is a perspective view illustrating the external structure of a rotation body in the battery protection unit, according to the present disclosure.
FIG. 7A is a perspective view illustrating a state in which the unit door is opened in the battery protection unit, according to the present disclosure.
FIG. 7B is an enlarged view of portion A of FIG. 7A.
FIG. 8A is a vertical cross-sectional view illustrating the moment when the shaft assembly is inserted into the handle assembly in the battery protection unit, according to the present disclosure.
FIG. 8B is a vertical cross-sectional view illustrating a state in which the shaft assembly is completely inserted into the handle assembly in the battery protection unit, according to the present disclosure.
FIG. 8C is a vertical cross-sectional view illustrating a state in which the shaft assembly rotates depending on the rotation of the handle assembly in the battery protection unit, according to the present disclosure.
FIG. 8D is a vertical cross-sectional view illustrating a state in which the locked state of the unit door is set depending on the rotation of the shaft assembly in the battery protection unit, according to the present disclosure.
FIG. 8E is a horizontal cross-sectional view illustrating a state in which the locked state of the unit door is set depending on the rotation of the shaft assembly in the battery protection unit, according to the present disclosure.
FIG. 9A is an enlarged view of portion B of FIG. 8B.
FIG. 9B is an enlarged view of portion C of FIG. 8E.
FIG. 10A is a view schematically illustrating a connecting structure between a door handle assembly and a breaker switch in the battery protection unit, according to the present disclosure.
FIG. 10B is a view for describing a switch-on operation in the battery protection unit, according to the present disclosure.
FIG. 10C is a view for describing a switch-off operation in the battery protection unit, according to the present disclosure.

Corresponding reference characters indicate corresponding components throughout the several views of the drawings. Skilled artisans will appreciate that elements in the FIGURES are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### MODE FOR CARRYING OUT THE INVENTION

Hereinafter, with reference to the accompanying drawings, embodiments of the present disclosure will be described in detail so that a person ordinarily skilled in the art can easily implement the present disclosure. However, the present disclosure may be implemented in various different forms and is not limited or restricted by the following examples.

In order to clearly describe the present disclosure, detailed descriptions of portions unrelated to the description or related known technologies that may unnecessarily obscure the gist of the present disclosure have been omitted, and when adding reference numerals to components in each drawing in this specification, the same or similar reference numerals are assigned to the same or similar components throughout the specification.

In addition, the terms and words used in the specification and claims should not be construed as limited to their ordinary or dictionary meanings, but should be construed as meanings and concepts consistent with the technical idea of the present disclosure based on a principle that an inventor may appropriately define the concepts of terms in order to explain his or her invention in the best way.

A battery rack is a battery unit assembly in which a plurality of battery modules and/or packs are connected, and is the smallest unit that can be electrically connected to a power conversion device. In addition to the batteries, a circuit breaker may be loaded in the battery rack to interrupt power supplied to the batteries. A door is generally installed to such a battery rack to minimize exposure of the loaded batteries and the circuit breaker to the outside, but conventionally used doors have various problems. In order to overcome these problems of conventional doors, a battery rack is sometimes used without being installed with the door. When the battery rack is not installed with the door, the loaded batteries and the circuit breaker are exposed to the outside, and particles flow into the batteries or the circuit breaker.

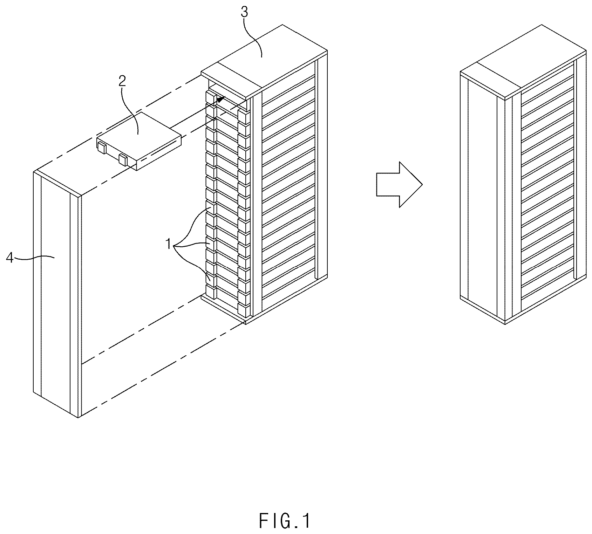

FIG. 1 illustrates a conventional battery storage system in which a door is installed to a battery rack. Here, the battery storage system includes a loading frame 3 in which the batteries 1 and a circuit breaker 2 are loaded, and a frame door 4 coupled to the loading frame 3.

When charging or discharging the batteries 1, it is necessary for a user to operate the circuit breaker 2 to apply or interrupt current to the batteries 1. The frame door 4 illustrated in FIG. 1 is an integrated door and comprehensively covers the loading frame 3 in which the batteries 1 and the circuit breaker 2 are loaded. That is, in the case of such an integrated frame door 4, in order to operate the circuit breaker 2, it is necessary for a user, for example, to open the entire frame door 4 and then operate a switch of the circuit breaker 2. In this case, the user is exposed to static electricity flowing through the batteries 1 and the circuit breaker 2, which increases the risk of, for example, an electric shock accident during the operation of the circuit breaker 2.

In consideration of the problems with the conventional rack door, the present disclosure proposes a battery storage system and a battery protection unit that ensures user safety and has excellent aesthetics by separately installing a door covering the circuit breaker 2.

Hereinafter, the battery storage system and battery protection unit according to the present disclosure will be described with reference to the drawings.

### Battery Storage System

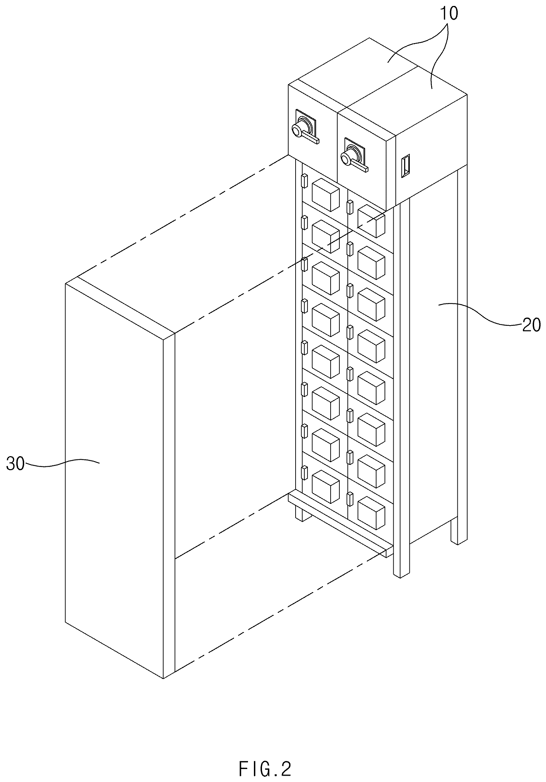

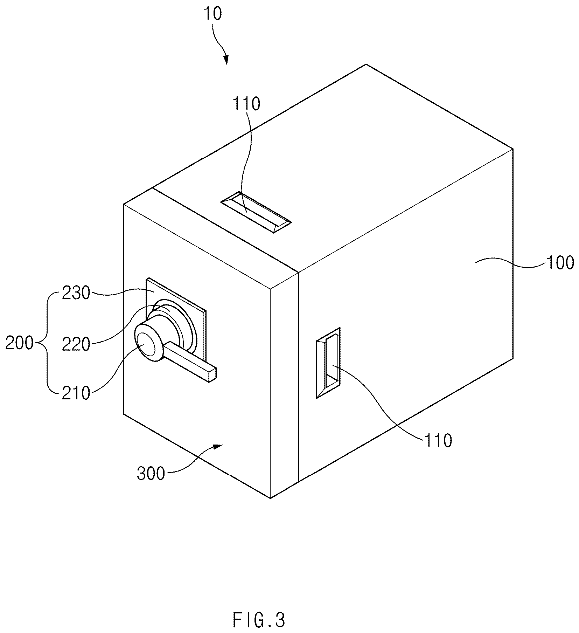

FIG. 2 is a perspective view illustrating a battery storage system according to the present disclosure, and FIG. 3 is a perspective view illustrating a state in which a separately installed unit door is closed in a battery protection unit installed to the battery storage system according to the present disclosure.

Referring to FIG. 2, the battery storage system according to the present disclosure includes a battery loading unit 20 where the batteries are loaded, a rack door 30 coupled to the battery loading unit, and a battery protection unit 10 installed on one side of the battery loading unit 20 to control charging and discharging of the batteries.

A battery is a device that supplies power to an electronic device, and the most basic unit of a battery is a battery cell. A battery cell may have a positive electrode, a separator, and a negative electrode sequentially stacked within an exterior material, and the space inside the exterior material is filled with an electrolyte. A plurality of battery cells is connected in series and/or parallel and wrapped with a frame to form a battery module, and an assembly of battery modules may form a battery pack.

The battery loading unit 20 is a loading frame where batteries are loaded, in which case, a battery may be understood as a concept encompassing all of a battery cell, a battery module, and a battery pack. Meanwhile, there is no particular limitation on the structure of the battery loading unit 20, and the battery loading unit 20 according to an embodiment includes a plurality of loading columns, each of which is capable of loading a plurality of batteries in the vertical direction, and is coupled to each other, as illustrated in FIG. 2. In this case, two or more battery protection units 10 may be provided.

The rack door 30 is an opening/closing door attached to the battery loading unit 20, and may serve to protect the batteries built in the battery loading unit 20 from the outside. Like the battery loading unit 20 described above, there are no particular restrictions on the structure of the rack door 30. For example, the rack door 30 according to an embodiment may have a structure in which a handle is provided on one door, and may have various structures such as, for example, a double door-type door or a sliding door.

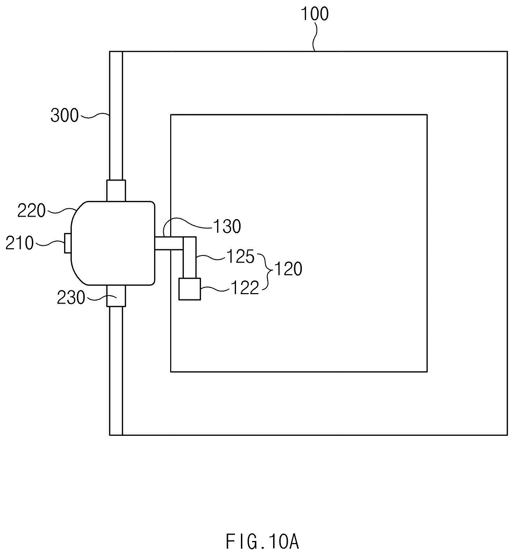

Meanwhile, referring to FIG. 3, a battery protection unit 10 is installed on one side of the battery loading unit 20 (in the present embodiment, the battery protection unit is installed at the top of the battery loading unit 20), and may include a circuit breaker 120 (see, e.g., FIG. 10A) that interrupts power supplied to the batteries, a main body 100 that accommodates the circuit breaker 120 therein, and a unit door 300 coupled to the main body 100.

The circuit breaker 120 is a device installed to a circuit that supplies power to or from the batteries and configured to interrupt the flow of current to prevent an accident caused by abnormal current flowing in the circuit. There is no particular limitation on the type of the circuit breaker 120 according to the present disclosure, and the circuit breaker 120 may include, for example, a circuit breaker that interrupts a high load and a short circuit in the circuit, and an earth leakage breaker with an added earth leakage function that interrupts the current after detecting an earth leakage in an alternating current circuit with a ground wire. The details regarding, for example, an internal configuration and a connecting structure of the circuit breaker 120 will be described later.

The main body 100 is a circuit breaker accommodation case that accommodates the circuit breaker 120 therein, and there are no particular restrictions on the external structure. A unit door 300 that controls opening/closing of the main body 100 may be coupled to one side of the main body 100. Therefore, the opening/closing of the unit door 300 coupled to the main body 100 is controlled separately (or independently) from the rack door 30 coupled to the battery loading unit 20, and a user may, for example, open/close only the unit door 300 to operate the circuit breaker 120. That is, in this case, the user may operate the circuit breaker 120 by opening only the unit door 300 without opening the rack door 30.

That is, in the battery storage system according to the present disclosure, since the rack door 30 may be left closed in the process of operating the circuit breaker 120, it is possible to prevent external particles from unnecessarily entering to the batteries and to protect a user from static electricity flowing in the batteries.

The battery protection unit 10 may be configured to control the operation of the circuit breaker 120 installed inside the main body 100 depending on whether the unit door 300 is locked to the main body 100. For example, according to an embodiment, the battery protection unit 10 may be designed to stop the operation of the circuit breaker 120 when the unit door 300 is in the locked state (e.g., the state in which current is supplied to the batteries), and to operate the circuit breaker 120 when the unit door 300 is in the unlocked state (e.g., the state in which current is not supplied to the batteries).

Therefore, for example, in the state in which the circuit breaker does not operate so that current is supplied to the batteries, the unit door 300 is set to a locking state to prevent the user from opening the unit door 300, and in the state in which the circuit breaker operates so that current is not supplied to the batteries, the unit door 300 is set to an unlocked state to allow the user to open the unit door 300. Therefore, in this case, the user is capable of opening the unit door 300 coupled to the main body 100 only when current is not supplied to the batteries, thereby preventing an electric shock accident due to, for example, the static electricity flowing in the main body 100.

### Battery Protection Unit

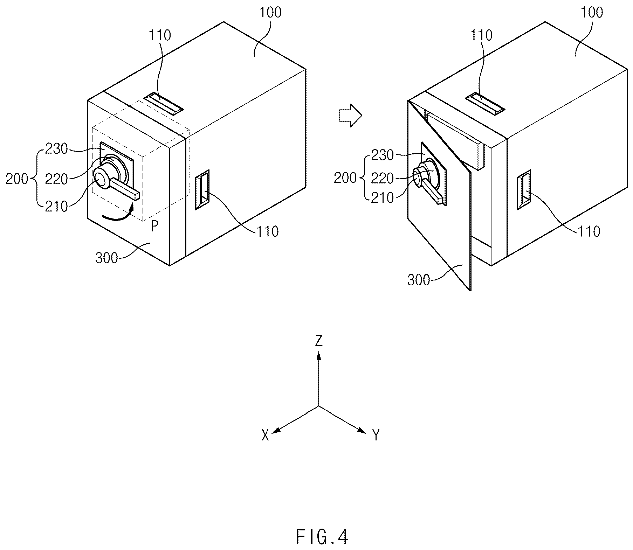

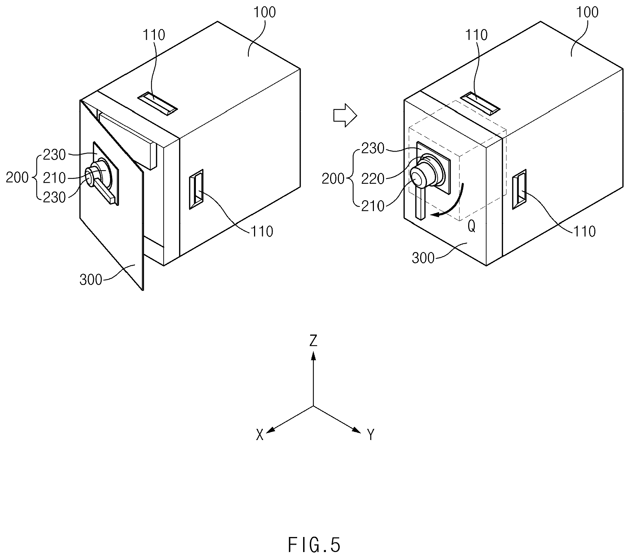

FIG. 4 is a perspective view illustrating the state in which the locked state of the unit door 300 is released in the battery protection unit 10 according to the present disclosure, and FIG. 5 is a perspective view illustrating the state in which the locked state of the unit door 300 is set in the battery protection unit 10 according to the present disclosure. For example, in the case of FIG. 4, the door handle 210 faces downward and then rotates about 90° counterclockwise as indicated by the arrow, and the unit door 300 is opened and the locked state is released. Meanwhile, as shown in FIG. 5, the door handle 210 rotates about 90° clockwise and the unit door 300 is closed, thereby setting the locked state.

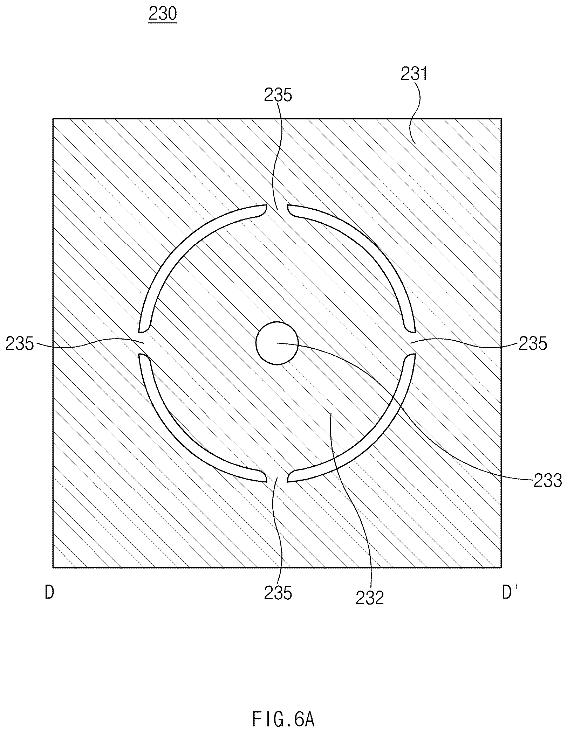

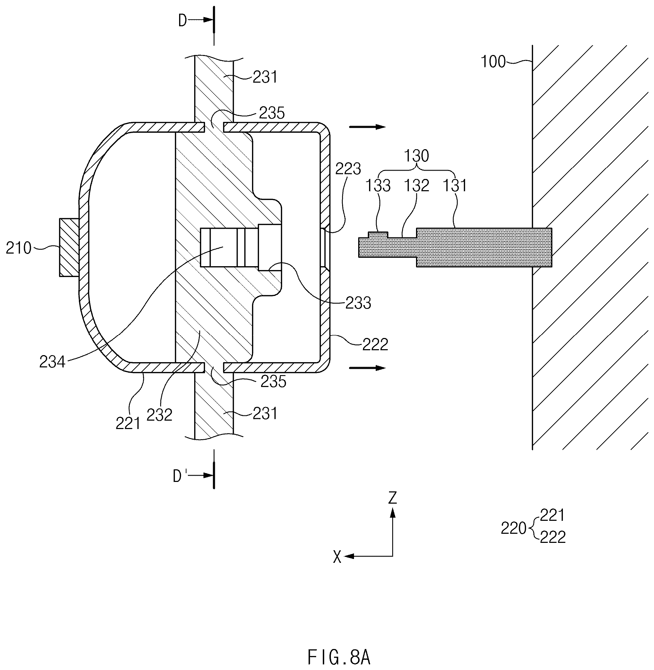

FIG. 6A is a vertical cross-sectional view illustrating a coupling structure of a locking member 230 in the battery protection unit 10 according to the present disclosure. The locking member 230 may include a first member 231, a second member 232, and one or more connecting members 235, and the second member 232 may include a shaft insertion groove 233 into which a shaft assembly 130 is inserted, which will be described later (see, e.g., FIG. 8A).

For example, the first member 231 has a configuration which is fixedly coupled to the unit door 300, and when the handle assembly 200 is fastened to the locking member 230, the first member 231 may be provided outside the rotation body 220.

The second member 232 has a configuration into which the shaft assembly 130 is inserted as the unit door 300 approaches the main body 100, and the shaft insertion groove 233 is formed in the second member 232. In this case, as the shaft assembly 130 inserted into the shaft insertion groove 233 rotates, the unit door 300 may be locked or unlocked. In addition, the second member 232 may include a configuration into which the shaft assembly 130 rotated in one direction is inserted to lock the unit door 300. In this case, when the shaft assembly 130 rotates in the other direction, the shaft assembly 130 is no longer fitted into the configuration, and the unit door 300 may be unlocked. Meanwhile, when the rotation body 220 is fastened to the locking member 230, the second member 232 may be provided inside the rotation body 220.

One or more connecting members 235 may be provided between the first member 231 and the second member 232 to interconnect the first member 231 and the second member 232. An empty space in which the connecting members 235 are not provided between the first member 231 and the second member 232 may be used as a space to guide the rotation of the rotation body 220 when the rotation body 220 is fastened to the locking member 230.

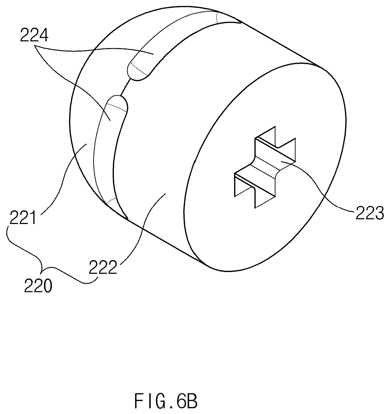

FIG. 6B is a perspective view illustrating the external structure of the rotation body 220 in the battery protection unit 10 according to the present disclosure.

As illustrated in FIG. 6B, the rotation body 220 may include a first body 221 and a second body 222, and an opening 223 may be formed in the second body 222, and connecting member insertion holes 224 may be provided between the first body 221 and the second body 222.

For example, the first body 221 is located outside the unit door 300 when the handle assembly 200 is installed to the unit door 300, and the door handle 210 may be coupled to the first body 221. In addition, the second body 222 is located inside the door unit 300 when the handle assembly 200 is installed on the unit door 300, and may be coupled to the first body 221 with the locking member 230 interposed therebetween.

When the locking member 230 and the rotation body 220 are fastened, the connecting members 235 of the locking member 230 are inserted into the connecting member insertion holes 224 between the first body 221 and the second body 222. The number of connecting member insertion holes 224 may correspond to the number of connecting members 235. In addition, the connecting members 235 rotate with the rotation of the rotation body 220, and the connecting member insertion holes 224 may be formed to extend to one side such that the rotating connecting members 235 can pass.

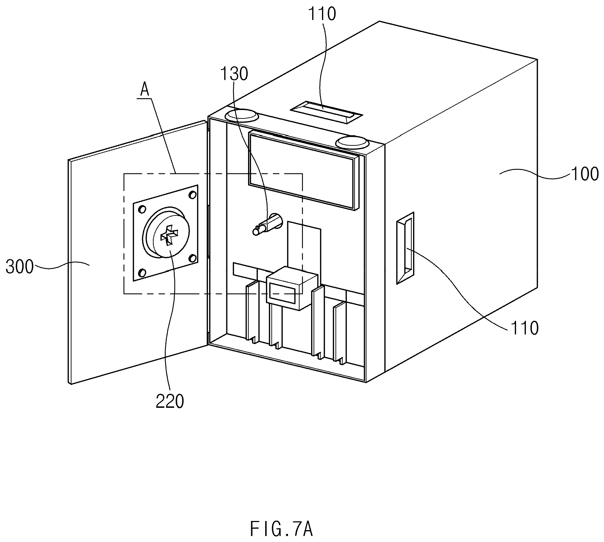

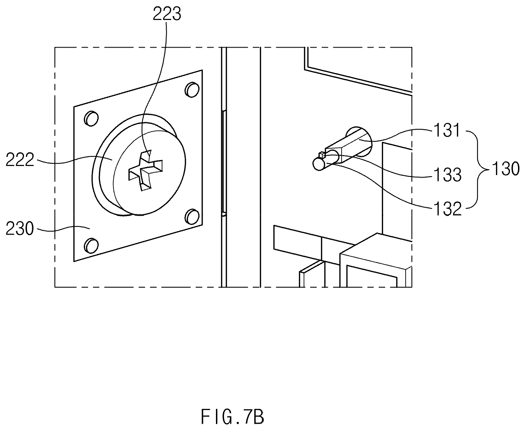

FIG. 7A is a perspective view illustrating the state in which the unit door 300 is opened in the battery protection unit 10 according to the present disclosure, and FIG. 7B is an enlarged view of the portion A of FIG. 7A.

Referring to FIGS. 7A and 7B, the shaft assembly 130 may have a multi-stage structure including a first shaft 131 protruding from the main body 100, a second shaft 132 extending from the first shaft 131 toward the unit door 300, and a protrusion 133 protruding from the second shaft 132 in a direction different from the direction in which the second shaft 132 extends.

Meanwhile, the first shaft 131 may have a prismatic shape, and the opening 223 formed in the second body 222 may have a shape corresponding to the prismatic shape of the first shaft 131 such that the first shaft 131 is fitted to the opening. In this case, the shape of the opening 223 corresponds to an angled bottom shape of the first shaft 131, which has an advantageous effect of effectively transmitting torque due to the rotation of the second body 222 to the first shaft 131.

The protrusion 133 is formed on the second shaft 132 and may protrude in a direction perpendicular to the direction in which the second shaft 132 extends. Meanwhile, the shaft insertion groove 233 into which the shaft assembly 130 is inserted is provided in the second member 232, and a protrusion coupling groove 234 may be provided inside the shaft insertion groove 233 such that the protrusion 133 is fitted into or separated from the protrusion coupling groove 234 depending on the rotating direction of the shaft assembly 130.

The unit door 300 is set to be locked as the protrusion 133 is fitted into the protrusion coupling groove 234, and to be unlocked as the protrusion 133 is separated from the protrusion coupling groove 234, which is advantageous in that the unit door 300 can be locked or unlocked with a relatively simple structure.

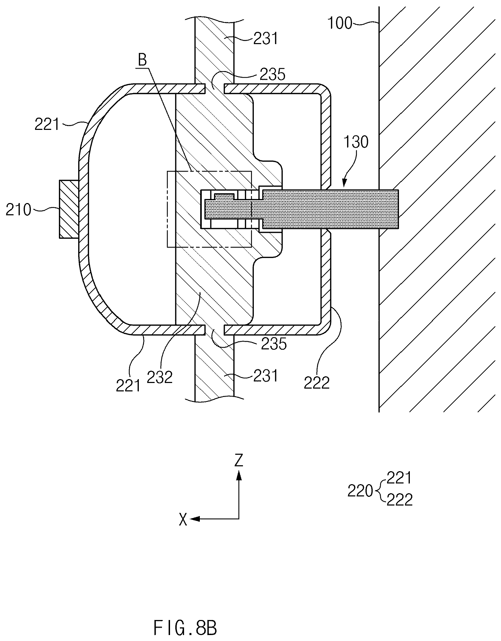

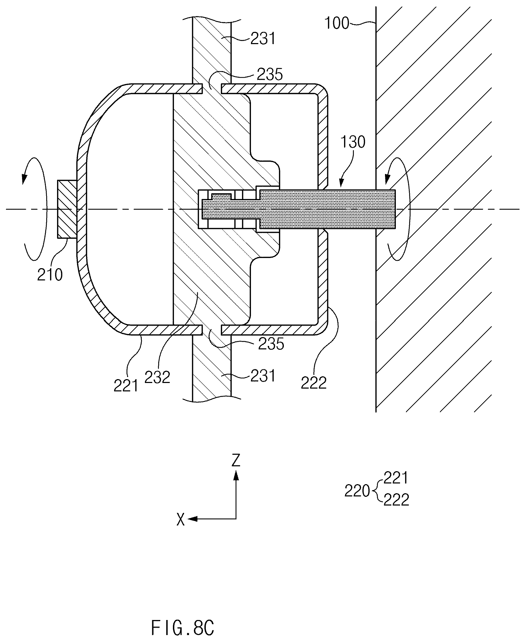

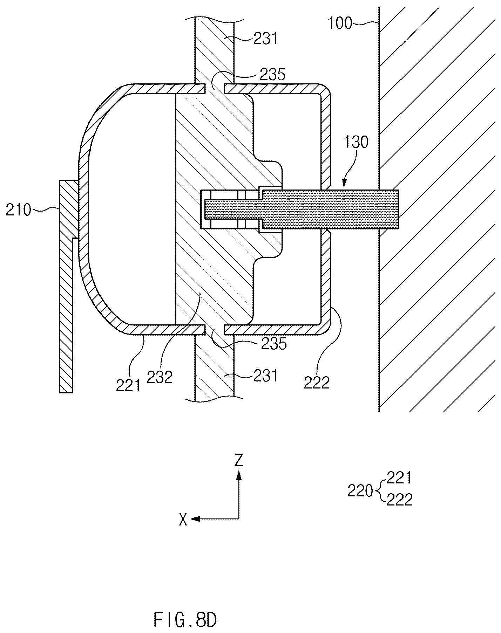

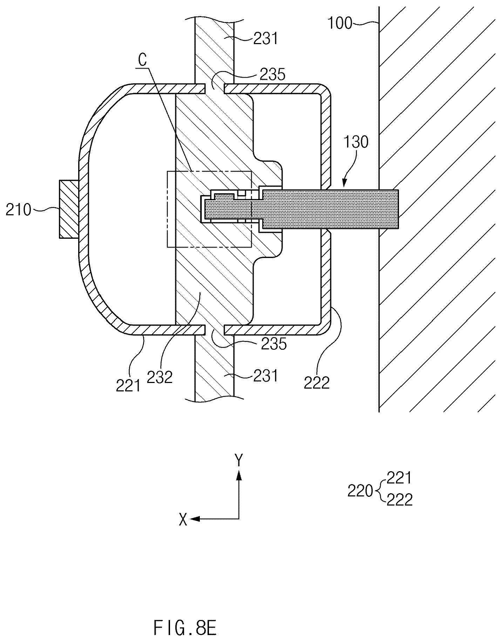

FIGS. 8A to 8E are views illustrating the process of locking the unit door 300 by inserting the shaft assembly 130 into the handle assembly 200 and rotating the shaft assembly 130 in the battery protection unit 10 according to the present disclosure. For example, FIG. 8A is a vertical cross-sectional view illustrating the moment when the shaft assembly 130 is inserted into the handle assembly 200, and FIG. 8B is a vertical cross-sectional view illustrating the state in which the shaft assembly 130 is fully inserted into the handle assembly 200. FIG. 8C is a vertical cross-sectional view illustrating the state in which the shaft assembly 130 rotates depending on the rotation of the handle assembly 200, and FIG. 8D is a vertical cross-sectional view illustrating the state in which the locked state of the unit door 300 is set depending on the rotation of the shaft assembly 130. FIG. 8E is a horizontal cross-sectional view illustrating the state in which the locked state of the unit door 300 is set depending on the rotation of the shaft assembly 130.

FIGS. 8A and 8B are vertical cross-sectional views illustrating the process of inserting the shaft assembly 130 into the handle assembly 200. In the process of closing the unit door 300, the handle assembly 200 installed on the unit door 300 approaches the main body 100 and gradually approaches the shaft assembly 130 protruding from the main body 100. Thereafter, when the unit door 300 meets the main body 100 and is closed, the shaft assembly 130 is inserted into the shaft insertion groove 223 formed in the handle assembly 200. Here, the protrusion coupling groove 234 is formed in the shaft insertion groove 233, but the protrusion 133 of the shaft assembly 130 is not inserted into the protrusion coupling groove 234, which allows the user to open the unit door 300 by pulling the handle assembly 200. That is, at this stage, the unit door 300 is not yet locked.

FIGS. 8C and 8D are vertical cross-sectional views illustrating the process of locking the unit door 300 according to rotation of the shaft assembly 130 in one direction. When the user rotates the door handle 210 in one direction, the rotation body 220 coupled to the door handle 210 also rotates in the same direction. Here, the first shaft 131 is fitted into the opening 223 of the rotation body 220, and the shaft assembly 130 rotates in the same direction as the rotation body 220. That is, the shaft assembly 130 rotates in the same amount as the door handle 210 rotates depending on the rotation of the door handle 210. Thereafter, when the door handle 210 rotates by a certain angle (e.g., 90 degrees), the protrusion 133 of the shaft assembly 130 is inserted into the protrusion coupling groove 234. In this case, the unit door 300 is locked since it is not possible for the user to open the unit door 300 by pulling the handle assembly 200.

FIG. 8E is a horizontal cross-sectional view illustrating the state in which the protrusion 133 is fitted into the protrusion coupling groove 234. Since the protrusion 133 is in the state of being fitted into the protrusion coupling groove 234, it is not possible for the user to open the unit door by pulling the handle assembly 200. Meanwhile, the user may cause the protrusion 133 to be separated from the protrusion coupling groove 234 by rotating the door handle 210 by a certain angle (e.g., 90 degrees) in the other direction. In this case, the unit door 300 is in an unlocked state, which allows the user to open the unit door 300 by pulling the handle assembly 200.

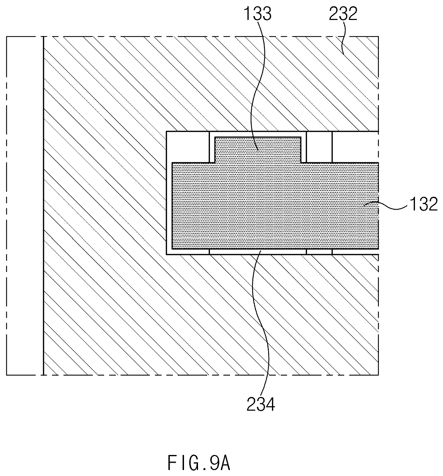

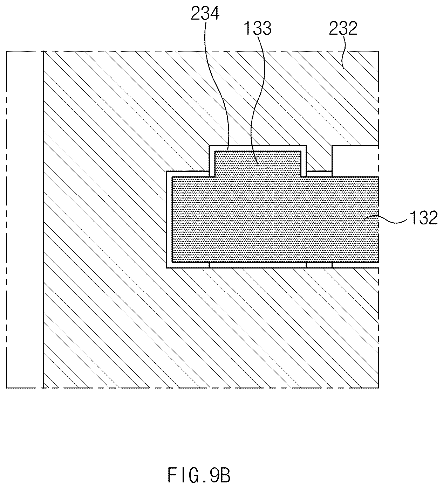

FIG. 9A is an enlarged view of the portion B of FIG. 8B, and FIG. 9B is an enlarged view of the portion C of FIG. 8E.

Referring to FIGS. 9A and 9B, the locational relationship between the protrusions 133 and the protrusion coupling groove 234 are illustrated in the unlocked and locked states of the unit door 300, respectively. FIG. 9A illustrates a case where the unit door 300 is not locked, in which case the protrusion 133 is not in the state of being fitted into the protrusion coupling groove 234. FIG. 9B illustrates a case where the unit door 300 is locked, in which case the protrusion 133 is in the state of being fitted into the protrusion coupling groove 234.

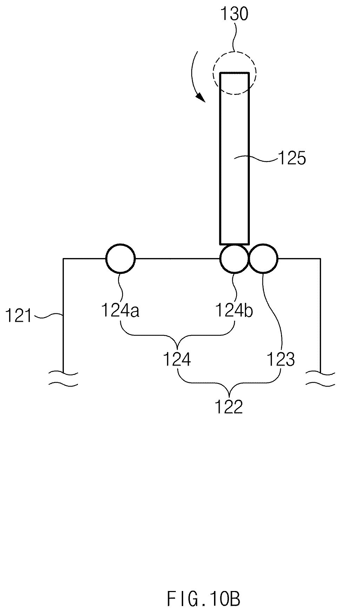

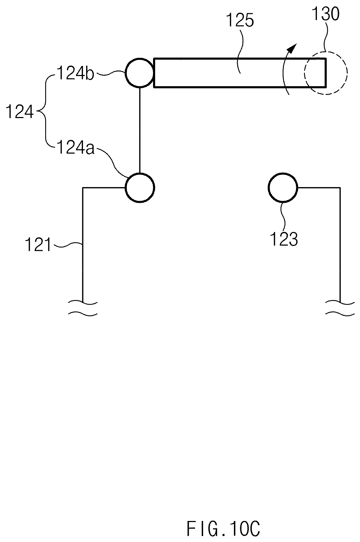

FIGS. 10A to 10C are views for explaining the operating principle of the circuit breaker 120 in the battery protection unit according to the present disclosure. For example, FIG. 10A is a view schematically illustrating a connecting structure between the door handle assembly and the breaker switch, FIG. 10B is a view for explaining a switch-on operation, and FIG. 10C is a view for explaining a switch-off operation.

As illustrated in FIG. 10A, the circuit breaker 120 may include a switch 122 installed to the power supply circuit 121 which supplies power to batteries and configured to turn on/off the power supply circuit 121, and a switch lever 125 configured to control the on/off operation of switch 122. Here, the switch lever 125 may be coupled to the shaft assembly 130 to extend in a direction different from the direction of the rotation axis of the shaft assembly 130, and may rotate with the shaft assembly 130 according to the rotation of the shaft assembly 130 to move to the switch-on location or switch-off location. When the switch lever 125 moves to the switch-on location, the switch 122 may perform the on-operation, and when the switch lever 125 moves to the switch-off location, the switch 122 may perform the off-operation.

The battery protection unit 10 according to the present disclosure includes a circuit breaker 120 that interrupts current supplied to the batteries, a main body 100 that accommodates the circuit breaker 120, a unit door 300 coupled to the main body 100, a handle assembly 200 that opens/closes the unit door 300 according to rotation operation, and a shaft assembly 130 protruding from the main body 100 and fastened to the handle assembly 200 to rotate together the handle assembly 200 when the handle assembly 200 rotates. Here, the circuit breaker 120 may be connected to the shaft assembly 130 to interrupt the current supplied to the batteries or release the interruption of the current depending on the rotation direction of the shaft assembly 130.

According to the battery protection unit 10 according to the present disclosure having the above structure, the user may control the operation of the circuit breaker 120 by rotating the handle assembly 200 without opening the unit door 300. The operation of the circuit breaker 120 may also be controlled even when the unit door 300 is not opened. In this case, the user may operate the circuit breaker 120 without being directly exposed to the main body 100 that accommodates the circuit breaker 120, which results in an advantageous effect of preventing an electric shock accident caused by static electricity or the like flowing in the circuit breaker 120.

The handle assembly 200 locks or unlocks the unit door 300 depending on the rotation operation thereof, and various configurations are possible. For example, the handle assembly 200 may include a door handle 210 provided to be rotationally operable from the outside, a rotation body 220 that rotates together with the door handle 210 depending on the rotation of the door handle 210, and a locking member 230 fastened to the unit door 300 to participate in locking and unlocking the unit door 300.

For example, the door handle 210 is provided to be rotationally operable from the outside and may have various configurations. For example, as illustrated in FIGS. 4 and 5, the door handle 210 may have a rod-shaped handle structure coupled to the rotation body 220.

The rotation body 220 is coupled to the door handle 210 and rotates together with the door handle 210 depending on the rotation of the door handle 210. The rotation body 220 may have an opening 223 into which a shaft assembly 130, which will be described later, is fitted. In this case, as the unit door 300 approaches the main body 100, the shaft assembly 130 is fitted into the opening 223, and then the shaft assembly 130 may also be rotated as the rotation body 220 rotates depending on the rotational operation of the door handle 210.

The locking member 230 locks or unlocks the unit door 300 depending on the rotating direction of the shaft assembly 130, and may include a configuration that locks the unit door 300 when the shaft assembly 130 rotated in one direction is fitted into the locking member. In this case, when the shaft assembly 130 rotates in the other direction, the shaft assembly 130 is no longer fitted into the configuration, and the unit door 300 may be unlocked.

Since the battery protection unit 10 according to the present disclosure includes the handle assembly 200 provided with the door handle 210, the rotation body 220, and the locking member 230, it is possible to rotate the shaft assembly 130 inside the system by rotationally operating the door handle 210 from the outside the system. The door handle 210 is capable of locking the unit door 300 by rotating in one direction, and capable of unlocking the unit door 300 by rotating the other direction (e.g., an opposite direction to the locking direction). FIGS. 4 and 5 illustrate the state in which the door handle 210 rotates counterclockwise to unlock the unit door 300 and rotates clockwise to lock the unit door 300. Meanwhile, unlike the state illustrated in FIGS. 4 and 5, the door handle 210 may rotate clockwise to unlock the unit door 300, and the door handle 210 may rotate counterclockwise to lock the unit door 300.

In particular, the shaft assembly 130 is connected to the circuit breaker 120 inside the system, and the circuit breaker 120 may be operated by rotating the shaft assembly 130, which allows the user to operate the circuit breaker 120 inside the system by rotationally operating the door handle 210 from the outside of the system.

Meanwhile, the locking member 230 may be fixedly coupled to the unit door 300, and the rotation body 220 may be rotatably fastened to the locking member 230. In this case, the locking member 230 is fixedly coupled to the unit door 300, and thus the locking member 230 can be fixed in situ even when the rotation body 220 rotates.

Since the battery protection unit 10 according to the present disclosure includes the locking member 230 having the above-described structure, the door handle 210, which is rotationally operable from the outside, and the rotation body 220, which rotates together with door handle 210 depending on the rotation of the door handle 210, can be firmly fastened to the unit door 300.

As described above, since the shaft assembly 130 rotates together with the door handle 210 depending on the rotation of the door handle 210, the power supply circuit 121 can be turned on/off by rotating the door handle 210. In this case, the user can operate the circuit breaker 120 by rotating the door handle 210 from the outside, so the power supply circuit 121 can be turned on/off without being directly exposed to the circuit breaker 120. In particular, the circuit breaker 120 is electrically connected to the power supply circuit 121, which may allow a small amount of current or static electricity to flow. In this case, the present disclosure has the advantage of preventing an electric shock accident.

The switch 122 may include a fixed contact 123 and a movable contact 124. Here, the fixed contact 123 is installed at a fixed location, and the movable contact 124 may include one end 124a fixedly installed on the power supply circuit 121 and the other end 124b coupled to the switch lever 125 to move together with the switch lever 125 depending on the switch lever 125. At this time, when the switch lever 125 moves to the switch-on location, the other end 124b may be brought into contact with the fixed contact 123, and when the switch lever 125 moves to the switch-off location, the other end 124b may be separated from the fixed contact 123.

The switch lever 125 is coupled to the shaft assembly 130, and when the shaft assembly 130 rotates, the switch lever 125 may rotate about the central axis thereof extending in a direction different from the direction of the rotation axis of the shaft assembly 130 to turn on/off the switch 122. The central axis of the switch lever 125 and the rotation axis of the shaft assembly 130 may be perpendicular to each other. In particular, as illustrated in FIGS. 10B and 10C, the switch lever 125 may have a shaft shape extending in a direction perpendicular to the direction of the rotation axis of the shaft assembly 130. When the shaft assembly 130 rotates in a direction to lock the unit door 300, the switch lever 125 may be moved to the switch-on location, and when the shaft assembly 130 rotates in a direction to unlock the unit door 300, the switch lever 125 may be moved to the switch-off location.

Meanwhile, the switch lever 125 is located inside the main body 100 and is coupled to the first shaft 131 of the shaft assembly 130 such that the switch lever 125 may move to the switch-on location or the switch-off location depending on the rotation of the first shaft 131.

One or more handles 110 may be provided on the main body 100, which results in an advantageous effect of improving user convenience while carrying the main body 100. Meanwhile, there is no particular limitation on the locations and numbers of handles 110 with respect to the main body 100.

While the embodiments of the present disclosure have been described in detail, the protection scope of the present disclosure is not limited to the embodiments. Various modifications and improvements may be made by one of ordinary skill in the field of the present disclosure, and are also included in the protection scope of the present disclosure.

### [Description of the Reference Numerals or Symbols]

10: battery protection unit
20: battery loading unit
30: rack door
100: main body
110: handle
120: circuit breaker
121: power supply circuit
122: switch
123: fixed contact
124: movable contact
124a: one end of the movable contact
124b: the other end of the movable contact
125: switch lever
130: shaft assembly
131: first shaft
132: second shaft
133: protrusion
200: handle assembly
210: door handle
220: rotation body
221: first body
222: second body
223: opening
224: connecting member insertion hole
230: locking member
231: first member
232: second member
233: shaft insertion groove
234: protrusion coupling groove
235: connecting member
300: unit door

## Claims

1. A battery storage system comprising:
a battery loading portion where a battery is loaded;
a rack door coupled to the battery loading portion; and
a battery protection unit installed on one side of the battery loading portion and configured to control charging and discharging of the battery,
wherein the battery protection unit includes;
a circuit breaker configured to interrupt power supplied to the battery,
a main body portion configured to accommodate the circuit breaker, and
a unit door coupled to the main body of the circuit breaker.

2. The battery storage system of claim 1, wherein the battery protection unit is configured to control operation of the circuit breaker depending on whether the unit door is locked with respect to the main body.

3. The battery storage system of claim 2, wherein the battery protection unit is configured to stop the operation of the circuit breaker when the unit door is in a locked state, and to operate the circuit breaker when the unit door is in an unlocked state.

4. The battery storage system of claim 1, wherein opening/closing of the unit door is controlled independently from the rack door.

5. A battery protection unit comprising:
a circuit breaker configured to interrupt current supplied to a battery;
a main body configured to accommodate the circuit breaker;
a unit door coupled to the main body;
a handle assembly configured to open/close the unit door according to a rotational operation; and
a shaft assembly protruding from the main body and fastened to the handle assembly to rotate together with the handle assembly when the handle assembly rotates,
wherein the circuit breaker is connected to the shaft assembly to interrupt the current supplied to the battery or release the interruption of the current depending on a rotating direction of the shaft assembly.

6. The battery protection unit of claim 5, wherein the handle assembly includes:
a door handle provided to be rotationally operated;
a rotation body coupled to the door handle to rotate together with the door handle depending on the rotation of the door handle and including an opening into which the shaft assembly is fitted to rotate the shaft assembly; and
a locking member fixedly coupled to the unit door and configured to lock or unlock the unit door depending on a rotating direction of the shaft assembly,
wherein the rotation body is rotatably fastened to the locking member.

7. The battery protection unit of claim 6, wherein the locking member includes:
a first member provided outside the rotation body and fixedly coupled to the unit door;
a second member provided inside the rotation body and configured to lock or unlock the unit door depending on the rotating direction of the shaft assembly; and
a connecting member connecting the first member and the second member.

8. The battery protection unit of claim 7, wherein the rotation body includes:
a first body to which the door handle is coupled; and
a second body coupled to the first body with the locking member interposed therebetween,
wherein a connecting member insertion hole into which the connecting member is inserted is formed between the first body and the second body.

9. The battery protection unit of claim 8, wherein the connecting member insertion hole extends to one side by the amount of a radius of rotation of the rotation body.

10. The battery protection unit of claim 7, wherein the shaft assembly includes:
a first shaft protruding from the main body;
a second shaft extending from the first shaft toward the unit door; and
a protrusion formed on the second shaft in a direction different from the direction in which the second shaft extends.

11. The battery protection unit of claim 10, wherein the first shaft has a prismatic shape, and
the opening has a shape corresponding to the prismatic shape of the first shaft so that the first shaft is fitted into the opening.

12. The battery protection unit of claim 10, wherein the protrusion protrudes in a direction perpendicular to the direction in which the second shaft extends.

13. The battery protection unit of claim 12, wherein the second lock is provided with a shaft insertion groove into which the shaft is inserted and a protrusion engaging groove provided inside the shaft insertion groove and configured such that the protrusion is fitted to or separated from the protrusion coupling groove depending on the rotating direction of the shaft, and
wherein the unit door is locked as the protrusion is fitted into the protrusion coupling groove and is unlocked as the protrusion is separated from the protrusion coupling groove.

14. The battery protection unit of claim 6, wherein the circuit breaker includes:
a switch connected to a power supply circuit that supplies power to the battery and configured to turn on/off the power supply circuit; and
a switch lever coupled to the shaft assembly to extend in a direction different from a direction of a rotation axis of the shaft and configured to rotate together with the shaft to move to a switch-on location or a switch-off location to perform an on/off operation of the switch depending on the rotation of the shaft.

15. The battery protection unit of claim 14, wherein the switch includes:
a fixed contact installed at a fixed location; and
a movable contact including one end fixed to the power supply circuit, and another end coupled to the switch lever and configured to move together with the switch lever when the switch lever rotates,
wherein the another end is brought into contact with the fixed contact when the switch lever moves to the switch-on location, and is separated from the fixed contact when the switch lever moves to the switch-off location.

16. The battery protection unit of claim 15, wherein the shaft is configured to rotate in a direction to lock the unit door to move the switch lever to the switch-on location and to rotate in a direction to unlock the unit door to move the switch lever to the switch-off location.

17. The battery protection unit of claim 5, wherein at least one handle is provided on the main body.
